# EUROPÄISCHE PATENTANMELDUNG

(11) **EP 4 455 919 A1**
(43) Veröffentlichungstag der Anmeldung: **30.10.2024**
(21) Anmeldenummer: 23169884.6
(22) Anmeldetag: 25.04.2023
(51) Int. Cl.: G06F 21/57, H04L 9/40

(54) **KONTROLLE EINER KOMMUNIKATION EINES GERÄTS IN EINER ZERO-TRUST-ARCHITEKTUR**

(71) Anmelder: Siemens Aktiengesellschaft, 80333 München (DE)
(72) Erfinder: Aschauer, Hans, 81829 München (DE); Becker, Stefan, 91325 Adelsdorf (DE); Falk, Rainer, 85435 Erding (DE); Feist, Christian Peter, 80689 München (DE); Laurig, Frank, 92369 Sengenthal (DE); Palmin, Anna, 76187 Karlsruhe (DE)
(74) Vertreter: Siemens Patent Attorneys

(57) **Zusammenfassung**

Die Erfindung betrifft ein Verfahren zum Bereitstellen einer Sicherheitsmaßnahme (3) zur Kontrolle einer Kommunikation (4) eines Geräts in einer Zero-Trust-Architektur, mit den Schritten:
- Ein Heranziehen (S1) einer attribut-basierten zero-trust Überwachungsrichtlinie für das Gerät,
wobei die Überwachungsrichtlinie Überwachungsattribute aufweist, welche vorgeben, in welchem Zustand das Gerät vertrauenswürdig ist,
- ein lokales Ermitteln (S2) von vorliegenden Attributen des Geräts, welche jeweils zu einem korrespondierenden Überwachungsattribut der Überwachungsattribute korrespondieren und einem ermittelten Zustand des Geräts entsprechen,
- ein lokales Ermitteln eines Vergleichsergebnisses durch ein Vergleichen (S3) der vorliegenden Attribute mit dem jeweils einem korrespondierenden Überwachungsattribut,
- ein lokales Ableiten (S4) einer eigenen Vertrauenswürdigkeit des Geräts aus dem Vergleichsergebnis, und
- das Bereitstellen (S5) der Sicherheitsmaßnahme (3) zur Kontrolle der Kommunikation (4) des Geräts in Abhängigkeit der eigenen Vertrauenswürdigkeit.

Außerdem betrifft die Erfindung ein korrespondierendes Verfahren aus Sicht des Kommunikationspartners (2), sowie ein zugehöriges erstes Gerät (1) und ein zweites Gerät (2).

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Bereitstellen einer Sicherheitsmaßnahme zur Kontrolle einer Kommunikation eines Geräts in einer Zero-Trust-Architektur. Die Erfindung betrifft außerdem ein korrespondierendes Verfahren aus Sicht des Kommunikationspartners des Geräts, sowie ein zugehöriges erstes Gerät und ein zweites Gerät.

### Beschreibung des Stands der Technik

In einer Zero Trust Architektur wird Nutzern und Geräten kein implizites Vertrauen aufgrund ihres Standorts (insbesondere in einem bestimmten LAN / VLAN, Internet) gewährt. Bei dem Zugriff auf Ressourcen und Dienste wird die Vertrauenswürdigkeit anhand bestimmter, ausgewählter Eigenschaften (hier: Zero Trust Attributes - ZTAs) von Nutzern und Geräten ermittelt. Geräteeigenschaften sind insbesondere eine Konformität des Gerätes des Nutzers, ein aktueller Firmware-Stand (inkl. Patch-Status), eine Verwendung bestimmter Security-Features (insbesondere Festplattenversschlüsselung), etc. Eine Nutzereigenschaft ist insbesondere eine Identität des Nutzers.

An einer geeigneten Stelle wird entschieden (Policy Decision Point - PDP), ob ein Zugriff erfolgen darf, und anhand des Ergebnisses wird der Zugriff entweder erlaubt oder abgelehnt (Policy Enforcement Point - PEP). Wird bei dem Aufbau einer Verbindung erkannt, dass die Anfrage von einem Nutzer und/oder Gerät kommt, dessen ZTAs nicht mit den für die Ressourcen / Dienste notwendigen Anforderungen übereinstimmen, so kann der Verbindungsaufbau oder der Zugriff abgelehnt werden.

Es ist somit bekannt, Geräteeigenschaften für ein Zero Trust Szenario zu ermitteln und auszuwerten. Beispielsweise werden bei den Conditional Access Policies für Microsoft Intune Eigenschaften wie z.B. Verwendung von BitLocker, MS Defender Endpoint Risk Level, Secure Boot aktiviert, etc. auf dem Gerät durch eine spezielle Komponente ermittelt und an eine dedizierte Stelle in der (Enterprise-)Infrastruktur übermittelt. Diese kann die Eigenschaften bzgl. Konformität zu bestimmten Richtlinien überprüfen. Der ermittelte Zustand kann anschließend als Teil von Conditional Access Policies für das Erlauben bzw. Ablehnen von Zugriffen (z.B. auf bestimmte Cloud Apps) verwendet werden. Die Ermittlung und Übertragung der Geräteeigenschaften finden dabei z.B. beim Booten, oder in regelmäßigen Abständen zur Laufzeit statt. Die Überprüfung findet bei einem Zugriff auf die Ressource / den Service (z.B. Cloud App), also beim Verbindungsaufbau, statt.

Es sind allgemein außerdem Host-basierte Angriffserkennungs-Tools bekannt (Host-based Intrusion Detection System - HIDS). Diese erkennen ungewöhnliches bzw. unzulässiges Verhalten von auf einem Host ausgeführter Software. Beispielsweise kann OSSEC verwendet werden, um periodisch die Integrität von Dateien zu überprüfen und allgemein Änderungen am Dateisystem festzustellen. Die Reaktion auf eine Integritätsverletzung kann dabei z.B. das Senden einer E-Mail an einen Administrator, Erzeugen eines Log-Eintrags, oder dem Generieren einer Meldung in einem übergeordneten System (z.B. ein SIEM "Security Information and Event Management" System, ein "Supervisory Control and Data Acquisition" SCADA System, etc.) umfassen.

Es ist außerdem ein sicheres zero touch (im Sinne von "automatisiert") Device Onboarding bzw. Bootstrapping bekannt, wie z.B. aus BRSKI ("Bootstrapping Remote Secure Key Infrastructure") oder FIDO (unter dem Markennamen "FIDO (Fast IDentity Online) Device Onboard" bekannt). Dabei werden Mechanismen beschrieben / spezifiziert, wie noch nicht konfigurierte Geräte, die z.B. mit einem herstellerspezifischen Gerätezertifikat (Initial Device Identifier - IDevID, siehe z.B. IEEE 802.1AR) ausgestattet sind, automatisch für ihre Zielumgebung konfiguriert und mit entsprechenden Geheimnissen und Identitäten ausgestattet werden können.

Die Ermittlung der Geräteeigenschaften, welche in der Zero Trust Architektur zur Ableitung der Gerätekonformität verwendet werden, erfolgt in der Regel in bestimmten zeitlichen Abständen, zum Beispiel alle 30 Minuten oder einmal am Tag. Dies stellt einerseits eine Zeitspanne für nicht erkennbare Angriffe dar. Weiterhin wird die Gerätekonformität im bekannten Stand der Technik nur bei dem Aufbau einer Verbindung, dem Zugriff auf eine Ressource, überprüft. Änderungen nach dem Aufbau einer Verbindung werden somit nicht erkannt.

Die Aufgabe der Erfindung besteht darin, eine Lösung für eine verbesserte Ermittlung und Überprüfung der Gerätekonformität zum Steuern einer sichereren Kommunikation in einem Zero Trust Szenario bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bereitstellen einer Sicherheitsmaßnahme zur Kontrolle einer Kommunikation eines Geräts in einer Zero-Trust-Architektur, mit den Schritten:
- Ein Heranziehen einer Überwachungsrichtlinie für das Gerät, wobei die Überwachungsrichtlinie ausgebildet ist als eine attribut-basierte zero-trust Überwachungsrichtlinie,
wobei die Überwachungsrichtlinie Überwachungsattribute aufweist, wobei die Überwachungsattribute vorgeben, in welchem Zustand das Gerät vertrauenswürdig ist,
- ein lokales Ermitteln von vorliegenden Attributen des Geräts, wobei die vorliegenden Attribute jeweils zu einem korrespondierenden Überwachungsattribut der Überwachungsattribute korrespondieren,
wobei die vorliegenden Attribute jeweils einem ermittelten Zustand des Geräts entsprechen,
- ein lokales Ermitteln eines Vergleichsergebnisses durch ein Vergleichen der vorliegenden Attribute mit dem jeweils einem korrespondierenden Überwachungsattribut,
- ein lokales Ableiten einer eigenen Vertrauenswürdigkeit des Geräts aus dem Vergleichsergebnis, insbesondere als ein Prüfen der eigenen Vertrauenswürdigkeit zu verstehen, und
- das Bereitstellen der Sicherheitsmaßnahme zur Kontrolle der Kommunikation des Geräts in Abhängigkeit der eigenen Vertrauenswürdigkeit.

Eine Grundidee der Erfindung besteht darin, dass ein Gerät konfiguriert wird, um in einem konkreten Zero Trust Szenario für das Gerät relevanten Attribute lokal zu ermitteln und zu überprüfen und anhand des Ergebnisses die Sicherheitsmaßnahme einzuleiten. Im Rahmen der Sicherheitsmaßnahme wird das Ergebnis insbesondere übermittelt (an Kommunikationspartner oder eine überwachende Einheit) und/oder direkt zur lokalen Kontrolle einer Zero-Trust-Verbindung zu dem Gerät zu verwendet.

Die Überwachungsrichtlinie ist auch als eine Zero-Trust-Attribut (ZTA) Überwachungsrichtlinie (reference policy) bezeichenbar. Die Überwachungsattribute dienen als Referenzwerte. Das "Heranziehen" der Überwachungsrichtlinie für das Gerät ist insbesondere als ein Ermitteln oder ein Empfangen der Überwachungsrichtlinie ausgebildet. Insbesondere wird die Überwachungsrichtlinie verwendet, um die Kontrolle der Kommunikation des Geräts in der Zero-Trust-Architektur zu konfigurieren.

Die Überwachungsattribute geben vor, in welchem Zustand das Gerät vertrauenswürdig ist. "Vertrauenswürdig" ist dabei so zu verstehen, dass eine Kommunikation mit dem Gerät als "sicher" bewertet wird und/oder keine oder nur abschätzbare Risiken mit sich bringt.

Der Zustand des Geräts ist auch als eine Rahmenbedingung, ein aktueller Umstand und/oder eine aktuelle, vorliegende Konfiguration zu verstehen.

Die Überwachungsrichtlinie wird dabei insbesondere von:
- einem Netzwerkkonfigurations-System,
- einem Endpoint-Management-System,
- einem IAM-System (identity and access management system), und/oder
- einem Zero Trust Endpoint (z.B. Gerät oder Service) selbst
empfangen/herangezogen, d.h. von diesem an das Gerät übermittelt oder bereitgestellt.

Die Überwachungsrichtlinie wird außerdem insbesondere von:
- einem berechtigten Administrator des Geräts, und/oder
- einem entsprechend berechtigten Kommunikationspartner des Geräts
definiert und/oder ermittelt.

Die Erfindung bietet u.a. die Vorteile, dass durch die lokalen Verfahrensschritte zeitnah erkannt und gemeldet wird, ob ein Gerät die Überwachungsrichtlinie verletzt und dass zeitnah darauf reagiert wird (insbesondere durch einen Abbau einer Verbindung des Geräts). So ist ebenfalls eine Entkopplung der Prüfung der Vertrauenswürdigkeit des Geräts von einem konkreten Netzwerkzugriff (wie im Stand der Technik, wo eine Prüfung insbesondere bei Aufbau einer Verbindung oder dem Zugriff auf eine Ressource erfolgt) möglich.

In einer Weiterbildung der Erfindung beziehen sich die Überwachungsattribute (und damit insbesondere die vorliegenden Attribute) auf:
- eine Konformität des Gerätes,
- eine Konfiguration des Geräts, insbesondere ist der Zustand somit als ein Konfigurationszustand ausgebildet,
- einen aktuellen Firmware-Stand des Geräts,
- einen Patch-Status des Geräts,
- eine Verwendung einer definierten Sicherheitsfunktion für das Gerät,
- eine Verwendung einer definierten Härtungsmaßnahme für das Gerät,
- eine Verwendung eines Virenscanners auf dem Gerät,
- eine Verwendung einer Firewall für das Gerät,
- eine Verwendung eines Secure Boots auf dem Gerät,
- eine Verwendung einer Festplattenverschlüsselung auf dem Gerät,
- eine Inaktivität einer definierten Schnittstelle (eines Zugangs) zu dem Gerät,
- eine Umgebungsbedingung einer Umgebung des Geräts,
- eine bestehende Verbindung zu dem Gerät,
- eine Netzwerkkonfiguration des Geräts,
- einen dem Gerät zugehörigen Nutzer, und/oder
- eine Identität eines dem Gerät zugehörigen Nutzers.

Insbesondere werden die Überwachungsattribute anhand von Kundenanforderungen und/oder Einsatzbedingungen bei einem Kunden festgelegt.

In einer weiteren Weiterbildung der Erfindung umfasst die Sicherheitsmaßnahme:
- ein Übermitteln des Vergleichsergebnisses,
- ein Übermitteln einer Mitteilung,
- ein Ausgeben eines Signals,
- ein Ausführen einer lokalen Kontrolle auf dem Gerät,
- eine Kontrolle der Kommunikation des Geräts,
- ein Einschränken einer Verbindung des Geräts,
- ein Abbrechen einer Verbindung des Geräts,
- ein Einschränken eines Zugriffs des Geräts, und/oder
- ein Beenden eines Zugriffs des Geräts.

Die Sicherheitsmaßnahme ist auch als eine Reaktion bezeichenbar.

Das Übermitteln des Vergleichsergebnisses und/oder das Übermitteln der Mitteilung erfolgt insbesondere an:
- einen Kommunikationspartner des Geräts und/oder
- ein übergeordnetes Managementsystem, insbesondere ein "identity and access management system" (IAM-System), ein zentraler Logserver, ein SIEM-System (security information and event management system), und/oder
- eine lokale Komponente des Geräts.

Konkret sind insbesondere folgende vorteilhafte Ausführungsformen der Sicherheitsmaßnahme (Reaktion) realisierbar:
- Eine Prüfung der Zero Trust Attribute bleibt während der gesamten Verbindungsdauer aktiv. Wird die Überwachungsrichtlinie verletzt, kann ein Signal an alle Kommunikationspartner übermittelt werden, die die Verbindung dann insbesondere beenden oder einschränken können (z.B. nur noch bestimmte API-Aufrufe, Frequenz, Daten, etc.).
- Weiterhin ergibt sich die Möglichkeit, dass ein Kommunikationspartner auch nach dem Verbindungsabbau diese Information erhält und nachträglich entscheiden kann, ob er insbesondere schon ausgetauschte Daten verwirft oder aufgrund der Kommunikation angestoßene Operationen wieder abbricht.

- Es kann je Verbindung (oder je Kommunikationspartner/Peer) eine Meldung erfolgen, wenn die der jeweiligen Kommunikationsverbindung zugeordnete, dynamisch zugewiesene ZTA-Überwachungsrichtlinie verletzt wird. Es ist demnach möglich, dass auf einem Gerät auch mehrere ZTA-Überwachungsrichtlinien parallel konfiguriert werden.
- Das Gerät kann eine Zero-Trust-Verbindung (ZT-Verbindung) auch eigenständig beenden, wenn eine Verletzung der Überwachungsrichtlinie festgestellt wird. Dabei kann insbesondere dem Kommunikationspartner und/oder weiteren Komponenten in dem System eine vereinfachte Meldung (z.B. "Verbindungsabbruch, da ZTA-Überwachungsrichtlinie verletzt wurde") übermittelt werden.

In einer weiteren Weiterbildung der Erfindung ist die Sicherheitsmaßnahme durch die Überwachungsrichtlinie vorgegeben.

Die Überwachungsrichtlinie enthält somit auch eine Angabe zu auszuführenden Sicherheitsmaßnahmen, insbesondere ist die Angabe in Abhängigkeit des Vergleichsergebnisses definiert. Nach dem Heranziehen, insbesondere Empfangen, der Überwachungsrichtlinie wird das Gerät konfiguriert, die Sicherheitsmaßnahme bei einem bestimmten Vergleichsergebnis entsprechend auszuführen.

In einer weiteren Weiterbildung der Erfindung erfolgt das Heranziehen der Überwachungsrichtlinie für das Gerät wiederholt während eines laufenden Betriebs des Geräts.

"Wiederholt" bedeutet dabei, dass kontinuierlich in periodischen Zeitabschnitten oder zu manuell bestimmbaren Zeitpunkten das Heranziehen der Überwachungsrichtlinie erfolgt. Das Empfangen der Überwachungsrichtlinie ist somit als ein dynamisch fortlaufender Verfahrensschritt ausgebildet. Es erfolgt somit ein erneutes Heranziehen. Dies hat den Vorteil, dass dynamisch auf sich während des Betriebs ändernde Umstände und Zustände reagiert werden kann.

Die Überwachungsrichtlinie, auch als ZTA-Überwachungsrichtlinie bezeichenbar, welche die Überwachungsattribute, auch als Zero Trust Attribute bezeichenbar, aufweist und vorgibt, wird somit insbesondere:
- initial, im Rahmen eines Device-Onboardings, insbesondere in eine bestimmte Kundenumgebung, wie eine Fabrik, und/oder
- wie in dieser Ausführungsform offenbart, dynamisch im laufenden Betrieb des Geräts, insbesondere zu definierten Ergebnissen, wie insbesondere:
   - periodisch,
   - beim Aufbau einer Zero Trust Verbindung zu dem Gerät,
   - bevor ein Zugriffstoken für einen Service bereitgestellt wird, und/oder
   - nachdem eine Zero Trust Verbindung erfolgreich aufgebaut wurde,
von dem Gerät empfangen/herangezogen/ermittelt.

In einer weiteren Weiterbildung der Erfindung erfolgt das Heranziehen (ein erneutes Heranziehen) der Überwachungsrichtlinie für das Gerät in Abhängigkeit einer bestehenden Zero-Trust Verbindung.

In dieser Variante erfolgt eine Frequenz bzw. eine Häufigkeit des Heranziehens und damit eines Überwachens in Abhängigkeit des Verbindungsstatus einer ZT-Verbindung. So wird während einer bestehenden ZT-Verbindung insbesondere häufiger eine Überprüfung durchgeführt als vor oder nach Beenden der ZTA-Verbindung. Dies hat den Vorteil, dass dynamisch auf sich während des Betriebs ändernde Umstände und Zustände reagiert werden kann. Eine derart überwachte Zero-Trust-Verbindung kann auch als Zero-Trust-überwachte Verbindung bezeichnet werden. Dabei werden die Zero Trust Attribute bei einer aufgebauten Zero-Trust-Verbindung wiederholt überprüft.

In einer weiteren Weiterbildung der Erfindung erfolgt das lokale Ermitteln der vorliegenden Attribute des Geräts wiederholt während eines laufenden Betriebs des Geräts.

"Wiederholt" bedeutet dabei, dass das lokale Ermitteln der vorliegenden Attribute kontinuierlich in periodischen Zeitabschnitten oder zu manuell bestimmbaren Zeitpunkten erfolgt. Das lokale Ermitteln der vorliegenden Attribute ist somit als ein dynamisch fortlaufender Verfahrensschritt ausgebildet. Es erfolgt somit ein erneutes Ermitteln. Dies hat den Vorteil, dass dynamisch auf sich während des Betriebs ändernde Umstände und Zustände reagiert werden kann.

Entsprechend erfolgen die folgenden Verfahrensschritte (das lokale Ermitteln des Vergleichsergebnisses, das lokale Ableiten der eigenen Vertrauenswürdigkeit und das Bereitstellen der Sicherheitsmaßnahme) wiederholt während eines laufenden Betriebs des Geräts.

In einer weiteren Weiterbildung der Erfindung erfolgt das lokale Ermitteln (erneutes Ermitteln) von den vorliegenden Attributen des Geräts in Abhängigkeit einer bestehenden Zero-Trust Verbindung.

Entsprechend erfolgen die folgenden Verfahrensschritte (das lokale Ermitteln des Vergleichsergebnisses, das Ableiten der eigenen Vertrauenswürdigkeit, und das Bereitstellen der Sicherheitsmaßnahme) in Abhängigkeit einer bestehenden Zero-Trust Verbindung.

In dieser Variante erfolgt eine Frequenz bzw. eine Häufigkeit des Überwachens in Abhängigkeit des Verbindungsstatus einer ZT-Verbindung. So wird während einer bestehenden ZT-Verbindung insbesondere häufiger eine Überprüfung durchgeführt als vor oder nach Beenden der ZT-Verbindung. Dies hat den Vorteil, dass dynamisch auf sich während des Betriebs ändernde Umstände und Zustände reagiert werden kann.

In einer weiteren Weiterbildung der Erfindung weist das erfindungsgemäße Verfahren den weiteren Schritt auf:
- ein Empfangen einer Herstellerrichtlinie für das Gerät, wobei die Herstellerrichtlinie ebenfalls in das lokale Ableiten (=Prüfen) der eigenen Vertrauenswürdigkeit des Geräts einfließt.

So wird insbesondere bei einer Konfiguration im Rahmen eines Geräte-Onboardings auch das Ergebnis einer Überprüfung der Herstellerrichtlinie (auch als Original Equipment Manufacturer (OEM) Überwachungsrichtlinie bezeichenbar) verwendet. Insbesondere ist eine erfolgreiche Überprüfung ("OEM-Überwachungsrichtlinie (Überwachungsrichtlinie des Geräteherstellers) ist eingehalten") eine Voraussetzung für den Schritt des Empfangens der Überwachungsrichtlinie.

Durch die Konfiguration einer oder mehrerer ZTA-Überwachungsrichtlinien ist es zudem möglich, zwischen:
- Verletzungen einer OEM-Überwachungsrichtlinie (Überwachungsrichtlinie des Geräteherstellers) und
- Verletzungen einer für das jeweilige Zero Trust Szenario / Verbindung relevanten Richtlinie
zu unterscheiden. Auch können OEM-, ZTA-, sowie weitere Überwachungsrichtlinien in Kombination für eine generelle Bewertung der Geräteintegrität herangezogen werden.

In einer weiteren Weiterbildung der Erfindung weist die Überwachungsrichtlinie einen kryptographischen Schutz auf. Dies hat den Vorteil, dass das Gerät selbst oder eine andere Komponente die Überwachungsrichtlinie auf Integrität und Authentizität prüfen kann.

In einer weiteren Weiterbildung der Erfindung ist der kryptographische Schutz als eine kryptographische Signatur ausgebildet.

In einer weiteren Weiterbildung der Erfindung weist das erfindungsgemäße Verfahren den weiteren Schritt auf:
eine Kontrolle der Kommunikation des Geräts in Abhängigkeit der Sicherheitsmaßnahme.

Die Kontrolle der Kommunikation erfolgt in dieser Ausführungsform durch das Gerät selbst.

Die Erfindung umfasst außerdem ein Verfahren zur Kontrolle einer Kommunikation zu einem Gerät, mit dem Schritt:
- ein Kontrollieren der Kommunikation des Geräts in Abhängigkeit der genannten Sicherheitsmaßnahme, bereitgestellt nach einem erfindungsgemäßen Verfahren.

Die Kontrolle der Kommunikation erfolgt in dieser Ausführungsform durch den Kommunikationspartner des Geräts oder eine andere, externe Komponente, insbesondere ein übergeordnetes Managementsystem.

Die Sicherheitsmaßnahme ist in dieser Ausführungsform insbesondere ausgebildet als:
- ein Übermitteln des Vergleichsergebnisses,
- ein Übermitteln einer Mitteilung,
jeweils insbesondere an den Kommunikationspartner des Geräts oder die externe Komponente.

Die Erfindung umfasst außerdem ein erstes Gerät aufweisend:
- eine Überwachungskomponente, ausgebildet eine Überwachungsrichtlinie für das erste Gerät heranzuziehen, wobei die Überwachungsrichtlinie ausgebildet ist als eine attribut-basierte zero-trust Überwachungsrichtlinie, wobei die Überwachungsrichtlinie Überwachungsattribute aufweist, wobei die Überwachungsattribute vorgeben, in welchem Zustand das erste Gerät vertrauenswürdig ist,
- eine Ermittlungskomponente, ausgebildet vorliegende Attribute des ersten Geräts lokal zu ermitteln, wobei die vorliegenden Attribute jeweils zu einem korrespondierenden Überwachungsattribut der Überwachungsattribute korrespondieren,
   wobei die vorliegenden Attribute jeweils einem ermittelten Zustand des ersten Geräts entsprechen,
- eine Vergleichskomponente, ausgebildet ein Vergleichsergebnis durch ein Vergleichen der vorliegenden Attribute mit dem jeweils einem korrespondierenden Überwachungsattribut lokal zu ermitteln,
- eine Ableitungskomponente, ausgebildet eine eigene Vertrauenswürdigkeit des ersten Geräts aus dem Vergleichsergebnis lokal abzuleiten (eine eigene Vertrauenswürdigkeit zu prüfen), und
- eine Bereitstellungskomponente, ausgebildet eine Sicherheitsmaßnahme in Abhängigkeit der eigenen Vertrauenswürdigkeit bereitzustellen, wobei die Sicherheitsmaßnahme zur Kontrolle einer Kommunikation des ersten Geräts in einer Zero-Trust-Architektur ausgebildet ist.

Das "erste Gerät" entspricht dem im erfindungsgemäßen Verfahren als "Gerät" referenzierte Merkmal.

Die Erfindung umfasst außerdem ein zweites Gerät, aufweisend:
- eine Kontrollkomponente, ausgebildet eine Kommunikation zu einem erfindungsgemäßen ersten Gerät in Abhängigkeit der genannten Sicherheitsmaßnahme zu kontrollieren.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens, und
- Fig. 2: eine schematische Darstellung eines ersten Geräts und eines zweiten Geräts.

### DETAILLIERTE BESCHREIBUNG DER ERFINDUNG

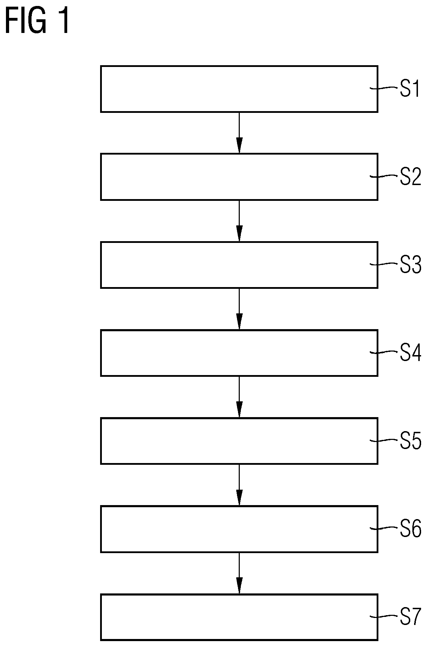

Fig. 1 zeigt ein Ablaufdiagramm des erfindungsgemäßen Verfahrens zum Bereitstellen einer Sicherheitsmaßnahme zur Kontrolle einer Kommunikation eines Geräts in einer Zero-Trust-Architektur, mit den Schritten:
- Schritt S1: Ein Heranziehen einer Überwachungsrichtlinie für das Gerät, wobei die Überwachungsrichtlinie ausgebildet ist als eine attribut-basierte zero-trust Überwachungsrichtlinie,
   wobei die Überwachungsrichtlinie Überwachungsattribute aufweist, wobei die Überwachungsattribute vorgeben, in welchem Zustand das Gerät vertrauenswürdig ist,
- Schritt S2: Ein lokales Ermitteln von vorliegenden Attributen des Geräts, wobei die vorliegenden Attribute jeweils zu einem korrespondierenden Überwachungsattribut der Überwachungsattribute korrespondieren,
   wobei die vorliegenden Attribute jeweils einem ermittelten Zustand des Geräts entsprechen,
- Schritt S3: Ein lokales Ermitteln eines Vergleichsergebnisses durch ein Vergleichen der vorliegenden Attribute mit dem jeweils einem korrespondierenden Überwachungsattribut,
- Schritt S4: Ein lokales Ableiten einer eigenen Vertrauenswürdigkeit des Geräts aus dem Vergleichsergebnis,
- Schritt S5: Das Bereitstellen der Sicherheitsmaßnahme zur Kontrolle der Kommunikation des Geräts in Abhängigkeit der eigenen Vertrauenswürdigkeit
- Schritt S6: Optional ein Empfangen einer Herstellerrichtlinie für das Gerät, wobei die Herstellerrichtlinie ebenfalls in das lokale Ableiten der eigenen Vertrauenswürdigkeit des Geräts einfließt, und
- Schritt S7: Optional ein Kontrollieren der Kommunikation des Geräts in Abhängigkeit der Sicherheitsmaßnahme.

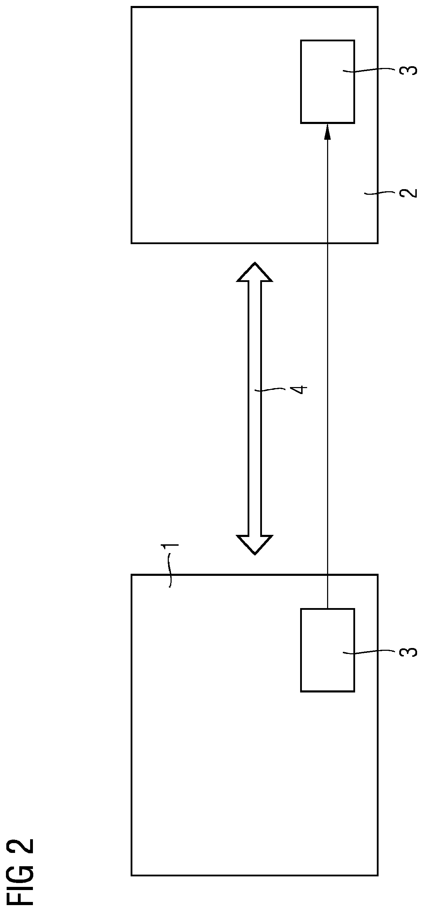

Fig. 2 zeigt eine schematische Darstellung eines ersten Geräts 1 und eines zweiten Geräts 2 in einer Zero-Trust-Architektur. Zwischen dem ersten Gerät 1 und dem zweiten Gerät 2 findet eine Kommunikation 4 statt.

Das erste Gerät 1 aufweisend:
- eine Überwachungskomponente, ausgebildet eine Überwachungsrichtlinie für das erste Gerät 1 heranzuziehen, wobei die Überwachungsrichtlinie ausgebildet ist als eine attribut-basierte zero-trust Überwachungsrichtlinie, wobei die Überwachungsrichtlinie Überwachungsattribute aufweist, wobei die Überwachungsattribute vorgeben, in welchem Zustand das erste Gerät 1 vertrauenswürdig ist,
- eine Ermittlungskomponente, ausgebildet vorliegende Attribute des ersten Geräts 1 lokal zu ermitteln, wobei die vorliegenden Attribute jeweils zu einem korrespondierenden Überwachungsattribut der Überwachungsattribute korrespondieren,
   wobei die vorliegenden Attribute jeweils einem ermittelten Zustand des ersten Geräts 1 entsprechen,
- eine Vergleichskomponente, ausgebildet ein Vergleichsergebnis durch ein Vergleichen der vorliegenden Attribute mit dem jeweils einem korrespondierenden Überwachungsattribut lokal zu ermitteln,
- eine Ableitungskomponente, ausgebildet eine eigene Vertrauenswürdigkeit des ersten Geräts 1 aus dem Vergleichsergebnis lokal abzuleiten, und
- eine Bereitstellungskomponente, ausgebildet eine Sicherheitsmaßnahme 3 in Abhängigkeit der eigenen Vertrauenswürdigkeit bereitzustellen, wobei die Sicherheitsmaßnahme 3 zur Kontrolle einer Kommunikation 3 des ersten Geräts 1 in einer Zero-Trust-Architektur ausgebildet ist.

Das zweite Gerät 2 aufweisend:
- eine Kontrollkomponente, ausgebildet eine Kommunikation 4 zu einem ersten Gerät 1 in Abhängigkeit der genannten Sicherheitsmaßnahme 3 zu kontrollieren.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bereitstellen einer Sicherheitsmaßnahme (3) zur Kontrolle einer Kommunikation (4) eines Geräts (1) in einer Zero-Trust-Architektur,
mit den Schritten:
- Ein Heranziehen (S1) einer Überwachungsrichtlinie für das Gerät (1), wobei die Überwachungsrichtlinie ausgebildet ist als eine attribut-basierte zero-trust Überwachungsrichtlinie,
wobei die Überwachungsrichtlinie Überwachungsattribute aufweist, wobei die Überwachungsattribute vorgeben, in welchem Zustand das Gerät (1) vertrauenswürdig ist,
- ein lokales Ermitteln (S2) von vorliegenden Attributen des Geräts (1), wobei die vorliegenden Attribute jeweils zu einem korrespondierenden Überwachungsattribut der Überwachungsattribute korrespondieren,
wobei die vorliegenden Attribute jeweils einem ermittelten Zustand des Geräts (1) entsprechen,
- ein lokales Ermitteln eines Vergleichsergebnisses durch ein Vergleichen (S3) der vorliegenden Attribute mit dem jeweils einem korrespondierenden Überwachungsattribut,
- ein lokales Ableiten (S4) einer eigenen Vertrauenswürdigkeit des Geräts (1) aus dem Vergleichsergebnis, und
- das Bereitstellen (S5) der Sicherheitsmaßnahme (3) zur Kontrolle der Kommunikation (4) des Geräts (1) in Abhängigkeit der eigenen Vertrauenswürdigkeit.

2. Verfahren nach Anspruch 1,
wobei sich die Überwachungsattribute auf:
- eine Konformität des Gerätes (1),
- eine Konfiguration des Geräts (1),
- einen aktuellen Firmware-Stand des Geräts (1),
- einen Patch-Status des Geräts (1),
- eine Verwendung einer definierten Sicherheitsfunktion für das Gerät (1),
- eine Verwendung einer definierten Härtungsmaßnahme für das Gerät (1),
- eine Verwendung eines Virenscanners auf dem Gerät (1),
- eine Verwendung einer Firewall für das Gerät (1),
- eine Verwendung eines Secure Boots auf dem Gerät (1),
- eine Verwendung einer Festplattenverschlüsselung auf dem Gerät (1),
- eine Inaktivität einer definierten Schnittstelle zu dem Gerät (1),
- eine Umgebungsbedingung einer Umgebung des Geräts (1),
- eine bestehende Verbindung zu dem Gerät (1),
- eine Netzwerkkonfiguration des Geräts (1),
- einen dem Gerät (1) zugehörigen Nutzer, und/oder
- eine Identität eines dem Gerät (1) zugehörigen Nutzers beziehen.

3. Verfahren nach einem der vorhergehenden Ansprüche, wobei die Sicherheitsmaßnahme (3) umfasst:
- ein Übermitteln des Vergleichsergebnisses,
- ein Übermitteln einer Mitteilung,
- ein Ausgeben eines Signals,
- ein Ausführen einer lokalen Kontrolle auf dem Gerät (1),
- eine Kontrolle der Kommunikation (4) des Geräts (1),
- ein Einschränken einer Verbindung des Geräts (1),
- ein Abbrechen einer Verbindung des Geräts (1),
- ein Einschränken eines Zugriffs des Geräts (1), und/oder
- ein Beenden eines Zugriffs des Geräts (1).

4. Verfahren nach einem der vorhergehenden Ansprüche, wobei die Sicherheitsmaßnahme (3) durch die Überwachungsrichtlinie vorgegeben ist.

5. Verfahren nach einem der vorhergehenden Ansprüche,
wobei das Heranziehen der Überwachungsrichtlinie für das Gerät (1) wiederholt während eines laufenden Betriebs des Geräts erfolgt.

6. Verfahren nach Anspruch 5,
wobei das Heranziehen der Überwachungsrichtlinie für das Gerät (1) in Abhängigkeit einer bestehenden Zero-Trust Verbindung erfolgt.

7. Verfahren nach einem der vorhergehenden Ansprüche,
wobei das lokale Ermitteln der vorliegenden Attribute des Geräts (1) wiederholt während eines laufenden Betriebs des Geräts (1) erfolgt.

8. Verfahren nach Anspruch 7,
wobei das lokale Ermitteln von den vorliegenden Attributen des Geräts (1) in Abhängigkeit einer bestehenden Zero-Trust Verbindung erfolgt.

9. Verfahren nach einem der vorhergehenden Ansprüche,
mit dem weiteren Schritt:
- ein Empfangen (S6) einer Herstellerrichtlinie für das Gerät, wobei die Herstellerrichtlinie ebenfalls in das lokale Ableiten der eigenen Vertrauenswürdigkeit des Geräts (1) einfließt.

10. Verfahren nach einem der vorhergehenden Ansprüche,
wobei die Überwachungsrichtlinie einen kryptographischen Schutz aufweist.

11. Verfahren nach Anspruch 10,
wobei der kryptographische Schutz als eine kryptographische Signatur ausgebildet ist.

12. Verfahren nach einem der vorhergehenden Ansprüche,
mit dem weiteren Schritt:
- ein Kontrollieren (S7) der Kommunikation (4) des Geräts (1) in Abhängigkeit der Sicherheitsmaßnahme (3).

13. Verfahren zur Kontrolle einer Kommunikation (4) zu einem Gerät (1),
mit dem Schritt:
- eine Kontrolle der Kommunikation (4) des Geräts (1) in Abhängigkeit der genannten Sicherheitsmaßnahme (3), bereitgestellt nach einem Verfahren der Ansprüche 1 bis 11.

14. Erstes Gerät (1)
aufweisend:
- eine Überwachungskomponente, ausgebildet eine Überwachungsrichtlinie für das erste Gerät (1) heranzuziehen, wobei die Überwachungsrichtlinie ausgebildet ist als eine attribut-basierte zero-trust Überwachungsrichtlinie, wobei die Überwachungsrichtlinie Überwachungsattribute aufweist, wobei die Überwachungsattribute vorgeben, in welchem Zustand das erste Gerät (1) vertrauenswürdig ist,
- eine Ermittlungskomponente, ausgebildet vorliegende Attribute des ersten Geräts (1) lokal zu ermitteln, wobei die vorliegenden Attribute jeweils zu einem korrespondierenden Überwachungsattribut der Überwachungsattribute korrespondieren,
wobei die vorliegenden Attribute jeweils einem ermittelten Zustand des ersten Geräts (1) entsprechen,
- eine Vergleichskomponente, ausgebildet ein Vergleichsergebnis durch ein Vergleichen der vorliegenden Attribute mit dem jeweils einem korrespondierenden Überwachungsattribut lokal zu ermitteln,
- eine Ableitungskomponente, ausgebildet eine eigene Vertrauenswürdigkeit des ersten Geräts (1) aus dem Vergleichsergebnis lokal abzuleiten, und
- eine Bereitstellungskomponente, ausgebildet eine Sicherheitsmaßnahme (3) in Abhängigkeit der eigenen Vertrauenswürdigkeit bereitzustellen, wobei die Sicherheitsmaßnahme (3) zur Kontrolle einer Kommunikation (3) des ersten Geräts (1) in einer Zero-Trust-Architektur ausgebildet ist.

15. Zweites Gerät (2),
aufweisend:
- eine Kontrollkomponente, ausgebildet eine Kommunikation (3) zu einem ersten Gerät (1) nach Anspruch 14 in Abhängigkeit der genannten Sicherheitsmaßnahme (3) zu kontrollieren.
